# EUROPEAN PATENT APPLICATION

(11) **EP 2 874 454 A1**
(43) Date of publication of application: **20.05.2015**
(21) Application number: 13193151.1
(22) Date of filing: 15.11.2013
(51) Int. Cl.: H04W 72/04

(54) **Reference signals in wireless communication**

(71) Applicant: FUJITSU LIMITED, Kawasaki-shi Kanagawa 211-8588 (JP)
(72) Inventor: Moulsley, Timothy, Caterham, Surrey CXR3 5EE (GB); Fang, Yiwei, High Wycombe, HP11 1GD (GB)
(74) Representative: Stebbing, Timothy Charles

(57) **Abstract**

In a LTE-based wireless communication system, a Demodulation Reference Symbol (DMRS) pattern is placed in Resource Element (RE) locations which can be reserved for Common Reference Symbol (CRS) ports. There will be various possibilities in the placement of DMRS in the CRS potential locations, depending on the number of CRS ports required, the number of REs required for DMRS in each cell, and the number of cells for which those DMRSs need to be orthogonal to reduce interference. The new DMRS pattern will be orthogonal to the legacy DMRS patterns therefore not causing any mutual interference. This new pattern will reuse the CRS locations which may be reserved for CRS but not needed to be configured as CRSs in the Small cell environment. The new DMRS patterns will take up fewer REs in an LTE Resource Block (RB) than the current DMRS design, and also allow different REs to be used in neighbouring cells, using the same cell dependent frequency shifts as for CRS.

## Description

### Field of the Invention

The present invention relates to wireless communication systems, for example systems compliant with the 3GPP Long Term Evolution (LTE) and 3GPP LTE-A groups of standards.

### Background of the Invention

Wireless communication systems are widely known in which base stations (BSs) communicate with user equipments (UEs) (also called subscriber or mobile stations) within range of the BSs.

The geographical area covered by one or more base stations is generally referred to as a cell, and typically many BSs are provided in appropriate locations so as to form a network covering a wide geographical area more or less seamlessly with adjacent and/or overlapping cells. (In this specification, the terms "system" and "network" are used synonymously). Each BS divides its available bandwidth, i.e. frequency and time resources, into individual resource allocations for the user equipments which it serves. The user equipments are generally mobile and therefore may move among the cells, prompting a need for handovers between the base stations of adjacent cells. A user equipment may be in range of (i.e. able to detect signals from) several cells at the same time, but in the simplest case it communicates with one "serving" cell.

Modern wireless communication systems such as LTE and LTE-A are hugely complex and a full description of their operation is beyond the scope of this specification. However, for assisting understanding of the inventive concepts to be described later, some outline will be given for some of the features of LTE which are of particular relevance in the present invention.

### Basic LTE Network

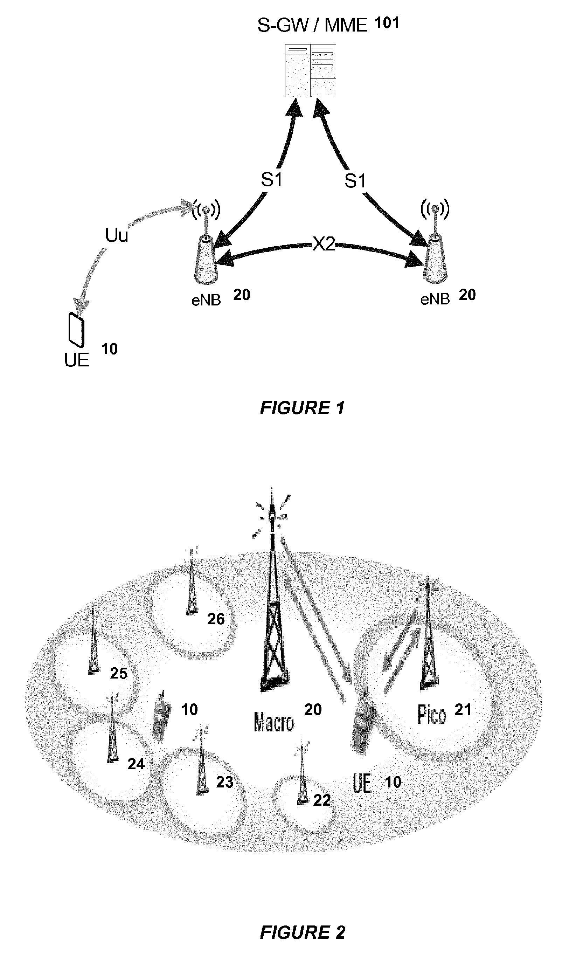

One type of cellular wireless network is based upon the set of standards referred to as Long-Term Evolution (LTE). The current version of the standard, Release 11 (Rel 11), is also referred to as LTE-A (LTE-Advanced). The network topology in LTE is illustrated in Figure 1. As can be seen, each terminal 10, called a UE in LTE, connects over a wireless link via a Uu interface to a base station in the form of an enhanced node-B or eNodeB 20. It should be noted that various types of eNodeB are possible. An eNodeB may support one or more cells at different carrier frequencies, each cell having differing transmit powers and different antenna configurations, and therefore providing coverage areas (cells) of differing sizes. Multiple eNodeBs deployed in a given geographical area constitute a wireless network called the E-UTRAN (and henceforth generally referred to simply as "the network"). An LTE network can operate either in a Time Division Duplex, TDD, mode in which the uplink and downlink are separated in time but use the same carrier frequency, or Frequency Division Duplex, FDD, in which the uplink and downlink occur simultaneously at different carrier frequencies.

Each eNodeB 20 in turn is connected by a (usually) wired link using an interface called S1 to higher-level or "core network" entities 101, including a Serving Gateway (S-GW), and a Mobility Management Entity (MME) for managing the system and sending control signalling to other nodes, particularly eNodeBs, in the network. In addition (not shown), a Packet Data Network (PDN) Gateway (P-GW) is present, separately or combined with the S-GW, to exchange data packets with any packet data network including the Internet. Thus, communication is possible between the LTE network and other networks.

### Small Cell Network (SCN)

Figure 1 shows what is sometimes called a "homogeneous network"; that is, a network of base stations in a planned layout and which have similar transmit power levels, antenna patterns, receiver noise floors and similar backhaul connectivity to the core network. Current wireless cellular networks are typically deployed as homogeneous networks using a macro-centric planned process. The locations of the base stations are carefully decided by network planning, and the base station settings are properly configured to maximise the coverage and control the interference between base stations. However, it is widely assumed that future cellular wireless networks will adopt a "heterogeneous network" structure composed of two or more different kinds of cell, also (and henceforth) referred to as a Small Cell Network or SCN.

Figure 2 depicts a simple SCN. The large ellipse represents the coverage area or footprint of a Macro cell provided by a base station (Macro BS) 20. The smaller ellipses represent Small cells within the coverage area of the Macro cell, each having a respective base station 21 - 26 (exemplified by Pico BS 21). Here, the Macro cell is a cell providing basic "underlay" coverage in the network of a certain area, and the Small cells are overlaid over the Macro cell, using the same or different carrier frequencies for capacity boosting purposes particularly within so-called "hot spot zones". A UE 10 is able to communicate both with Macro BS 20 and Pico BS 21 (but not necessarily simultaneously) as indicated by the arrows in the Figure. When a UE starts to use a given cell for its communication, that cell is said to be "activated" for that UE, whether or not the cell is already in use by any other UEs. Incidentally, although the Macro and Small cells are depicted here as being provided by different base stations, this is not essential and the same base station may be responsible for both a Macro cell and at least one Small cell. For example, a cell operating in a higher frequency band is likely to experience greater pathloss, and thus have shorter range, than one in a lower frequency band; thus the same base station may provide both a lower-frequency Macro cell and a higher-frequency Small cell. Channel conditions in Small Cells may differ from those in a Macro cell in various ways such as line of sight to the UE, slow fading and relatively high signal strength.

Regardless of the type of cell, LTE and LTE-A wireless communication systems employ a multi-access system referred to as OFDMA (Orthogonal Frequency Division Multiple Access) for the downlink. By assigning distinct frequency/time resources to transmissions to or from each user equipment in a cell, OFDMA can substantially avoid interference among the users served within a given cell. Data for transmission on the downlink is organised in OFDMA frames each divided into a number of subframes. Various frame types are possible and differ between FDD and TDD for example. Frames follow successively one immediately after the other, and each is given a system frame number (SFN).

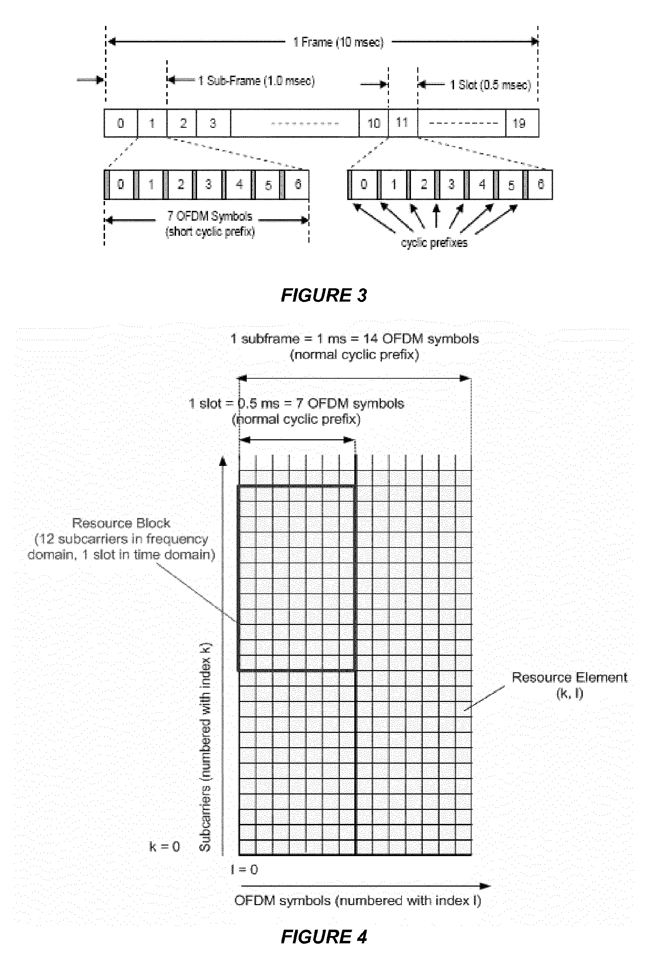

Figure 3 shows a generic frame structure for LTE, applicable to the downlink, in which the 10 ms frame is divided into 20 equally sized slots of 0.5 ms. A sub-frame consists of two consecutive slots, so one radio frame contains 10 sub-frames.

The transmitted signal in each slot is described by a resource grid of sub-carriers and available OFDM symbols, as shown in Figure 4. The small squares here (and throughout the later Figures) each represent a basic unit in the grid, called a resource element (RE) and corresponding to one symbol.

Modulation techniques are used to modulate data and control information onto the symbols. These modulation techniques include: QPSK (2 bits per symbol), 16QAM (4 bits per symbol), and 64QAM (6 bits per symbol). A modulation technique is selected based on the measured signal to interference plus noise ratio (SINR), each modulation scheme having a threshold SINR. UEs far from the eNodeB (i.e. with lower SINR values) use a more robust modulation scheme (lower throughput), while those closer to the eNodeB (i.e. with higher SINR values) can use less robust modulation schemes (higher throughput). Both the eNodeB and the UE can measure signal quality using Reference Signals (see below), which are known symbols transmitted from the eNodeB, possibly at a boosted power level. The eNodeB selects the modulation and coding scheme for both the downlink and uplink, based on measurements of the reference signals (both its own measurements, and measurements fed back from UEs).

For each transmission time interval of 1 ms, a new scheduling decision is taken regarding which UEs are assigned to which time/frequency resources during this transmission time interval. The basic scheduling unit for allocation of resources to the UEs is called a resource block (RB). Figure 4 indicates one Resource Block by the solid outline. A resource block is defined as 7 or 6 consecutive OFDM symbols in the time domain depending on the cyclic prefix length and 12 consecutive sub-carriers (180 kHz) in the frequency domain, and thus comprises 84 or 72 REs.

Several resource blocks may be allocated to the same UE in the same subframe, and these resource blocks do not have to be adjacent to each other in the frequency domain. A scheduling algorithm in the eNodeB has to take into account the radio link quality situation of different UEs, the overall interference situation, Quality of Service requirements, service priorities, etc.

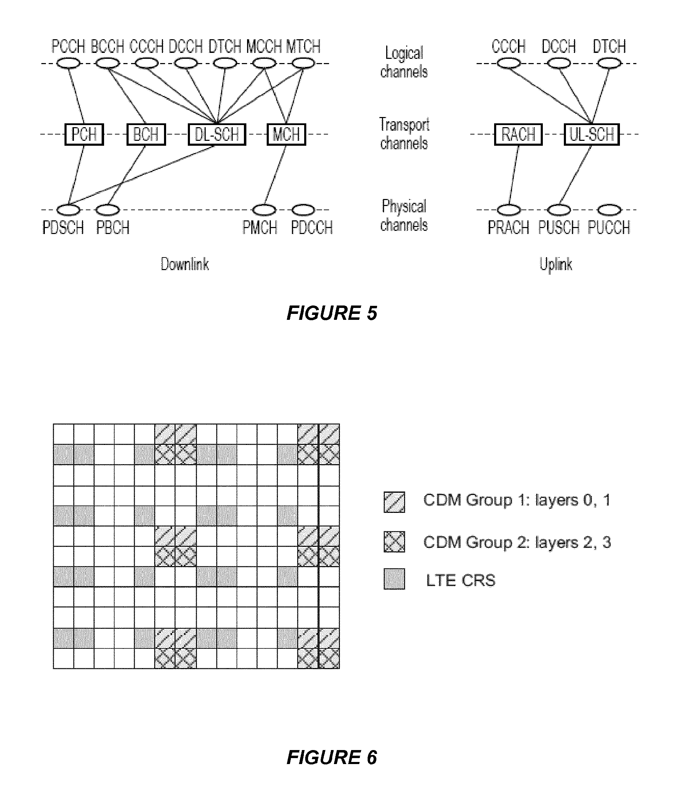

Several "channels" for data and signalling are defined at various levels of abstraction within the network. Figure 5 shows some of the channels defined in LTE at each of a logical level, transport layer level and physical layer level, and the mappings between them. For present purposes, the channels at the physical layer level are of particular interest.

On the downlink, user data is carried on the Physical Downlink Shared Channel (PDSCH). There are various control channels on the downlink, which carry signalling for various purposes including so-called Radio Resource Control (RRC). In particular the Physical Downlink Control Channel, PDCCH, is used to carry scheduling information from base stations (called eNodeBs in LTE) to individual UEs. The PDCCH is located in the first OFDM symbols of a slot. In LTE-A, there is also provision for a new control channel called EPDCCH or Enhanced PDCCH. This reuses some resource blocks previously used for PDSCH in order to provide additional capacity for supporting multi-carrier and multi-cell scenarios. At the physical layer level, RBs map to Physical Resource Blocks (PRBs) and henceforth the terms "RB" and "PRB" will be used somewhat interchangeably.

The scheduling information is contained in DCI, Downlink Control Information, having one of a number of DCI formats depending on the transmission mode in use (see below).

Meanwhile, on the uplink, user data and also some signalling data is carried on the Physical Uplink Shared Channel (PUSCH), and control channels include a Physical Uplink Control Channel, PUCCH, used to carry signalling from UEs including channel quality indication (CQI) reports, precoding matrix information (PMI), a rank indication for MIMO (see below), and scheduling requests.

### Reference Signals

The above "channels" defined for various data and signalling purposes, should not be confused with the "channel" in the sense of the radio link between a UE and its serving base station(s), which is subject to fading and interference as already mentioned. Particularly in a Small Cell scenario, a UE may employ several such channels simultaneously. UEs need to measure each communication channel between itself and eNodeB in order to provide appropriate feedback to the eNodeB. To facilitate measurements of the channel by UEs, reference signals are embedded in the resource blocks. In LTE a given reference signal is typically transmitted as a sequence of reference symbols, each symbol being inserted at intervals in the time/frequency domain and within individual REs. The locations of these REs for a given reference signal, within a RB or RB pair, forms a reference signal pattern. Various kinds of reference signal (or symbol) pattern are possible.

In the LTE downlink, currently there are five kinds of RS provided, which include:-
- Common Reference Signal (CRS), which is cell specific and available to all UEs in a cell
- Demodulation Reference Signals (DM-RS), which are embedded in the data to specific UEs
- MBSFN-specific RSs, which are used only for Multimedia Broadcast Single Frequency Network (MBSFN) operation
- Channel State Information (CSI-) RSs, which are introduced from LTE Rel 10 and are designed specifically for the purpose of estimating the downlink channel state and not for data demodulation
- Positioning RSs, which are the purpose of UE location measurement

The focus of the invention to be described will be the first two RS types, i.e. CRS and DMRS.

In LTE, eNodeBs and often also UEs are equipped with multiple physical antennas, allowing for the possibility of various transmission modes including MIMO (Multiple-Input, Multiple-Output) communication in which multiple data streams are simultaneously transmitted on different spatial "layers". Currently, up to 8 spatial layers are possible in LTE, but the number of spatial layers actually used (also called the "rank") depends on the scattering and multipath environment between the eNodeB and UE. In a Small Cell scenario with line of sight between the UE and eNodeB, there is effectively no scattering/multipath so only one spatial layer (rank 1) is available. (On the other hand, typically a high order modulation will be possible, allowing a high data throughput on this single layer).

By feeding back CSI (Channel State Information) based on its measurements of the channel conditions, a UE may indicate to the eNodeB (among other things) the data rate (CQI or Channel Quality Indicator), preferred precoding in the form of a PMI (Precoding Matrix Indicator) and number of spatial layers (RI or rank indicator) it can currently support. For example, "rank 1-4" indicates that the UE can accept up to 4 spatial layers in the downlink transmission from the eNodeB.

A transmission from the eNodeB corresponding to one spatial layer is transmitted by one or more "antenna ports", each of which may be regarded as a virtual or logical antenna formed by a set or subset of the actual physical antennas at the eNodeB. Thus, each antenna port is mapped to one or more of the physical antennas. To estimate the channel, a UE must make a separate measurement for each antenna port, hence each antenna port has its own reference signal pattern. Which antenna ports are used for a given transmission in a given cell will depend on the radio conditions fed back by the UE, including the above mentioned rank indicator.

CRS are used for some purposes by all UEs, for example for reception of the control channel PDCCH. The CRS enable the UE to determine the phase reference for demodulation of the downlink control channel and downlink data in some transmission modes of physical downlink shared channel (PDSCH). The CRS are also used by the UEs to estimate CSI. As already mentioned, each RS is transmitted from a respective antenna port at the eNB and there are 4 ports, i.e. antenna ports 0-3, designated for CRS transmission.

More recent transmission modes (for example as defined in Rel 10, Rel 11) use DMRS for downlink data demodulation. The current design of DMRS in LTE up to Rel 11 is based on reference symbols which are embedded in the RBs used for PDSCH transmitted to a specific UE. The UE specific RSs for each layer of the transmission undergo the same precoding as the data symbols, saving efforts on explicit transmission of precoding information to a UE. A variety of multi-antenna beamforming techniques can therefore be applied efficiently and transparently to a UE.

As already mentioned, reference signals are each associated with a respective antenna port. There is consequently a DMRS pattern for each of up to 8 antenna ports. To ensure orthogonality between these reference signals whilst limiting the number of REs required, Code Division Multiplexing is employed between pairs of spatial layers, the reference signals being assigned to one of two CDM groups as follows, and the CDM in a group applying over each pair of REs used by that group:
CDM Group 1: DMRS ports 0, 1, 4 and 6;
CDM Group 2: DMRS ports 2, 3, 5 and 7.

The two CDM Groups occupy different REs, halving the number of REs required to configure DMRS for 8 layers, compared with using TDM or FDM (corresponding to different RE locations in a pair of RBs) alone.

However, in the Small Cell scenario mentioned above, under the assumption that transmission employs rank 1 with high order modulation (possibly including modulation schemes above 64QAM such as 256QAM) and DMRS for data demodulation, only one DMRS port would be needed.

The designed pattern of Resource Elements (REs) for the DMRS in LTE has to meet certain criteria. These include:
1) The need to avoid overlapping with CRS and PDCCH to ensure backward capability with Rel 8 transmission modes.
2) The DMRS of different layers should be orthogonally multiplexed to avoid inter-layer RS interference.

This can usually be achieved by a combination of Frequency Division Multiplexing (FDM) and Time Division Multiplexing (TDM), and/or code division multiplexing (CDM).

Figure 6 shows a conventional DMRS pattern within an RB pair for the rank 1-4 case (in other words, up to 4 spatial layers). Incidentally, in this and the subsequent Figures, the case of a normal Cyclic Prefix and non-MSFBN subframes is assumed. The greyed-out squares denote REs reserved (that is, pre-defined in the system specification) for CRS. The DMRS - organised into the above mentioned Code Division Multiplexing Groups, CDM Group 1 and CDM Group 2 - have to be fitted around the CRS. It will be noted that the available locations are somewhat restricted, bearing in mind the need to reserve REs for PDCCH.

As noted above, Small cells have different characteristics to the macro cells of conventional homogeneous networks and there may be less need for UEs to estimate the channel in Small cells. To reduce the signalling overhead, it would therefore be desirable to reduce the number of REs required for DMRS where appropriate, for example in Small cells.

### Summary of the Invention

According to a first aspect of the present invention, there is provided a wireless communication method in which a base station transmits a downlink transmission to at least one of a plurality of terminals, said downlink transmission comprising at least one resource block capable of including at least one first reference signal and at least one second reference signal, the at least one first reference signal being common to the plurality of terminals, the at least one second reference signal being specific to a given terminal, the method comprising:
pre-defining a plurality of potential locations within the resource blocks for placement of a plurality of the first reference signals;
determining a need for a number of said first reference signals fewer than said plurality of first reference signals;
occupying some of said plurality of potential locations with said number of first reference signals determined to be needed, and occupying one or more of said plurality of potential locations remaining unoccupied after placing said number of first reference signals, with said at least one second reference signal.

Here, the "number of said first reference signals" may be zero or more. Thus, at a minimum there is no first reference signal determined to be needed.

In a system such as LTE, a reference signal may be regarded as a sequence of reference symbols transmitted in a given RE. The set of RE locations used for a reference signal within a subframe (or set of subframes) can be considered as a reference signal pattern.

In the above method, preferably, a pattern of potential locations (reference signal pattern) is pre-defined for each of the plurality of first reference signals, and at least one pattern not occupied by a first reference signal is occupied by said at least one second reference signal.

Further preferably, the base station comprises a plurality of antenna ports and a said pattern of potential locations is pre-defined for each of the antenna ports, and said determining determines that first reference signals are not needed for one or more of the antenna ports.

The method may further involve:
determining a need for first reference signals for at least one antenna port;
occupying the pattern for said at least one antenna port with the said at least one first reference signal; and
occupying, with the said at least one second reference signal, at least some locations of the pattern for at least one other antenna port.

In any method as defined above, the first reference signals may be common reference signals, CRS of a cell controlled by the base station, and the at least one second reference signal may be a demodulation reference signal, DMRS, of the downlink transmission to the given terminal.

In this case, the method may involve occupying the pattern for one CRS antenna port with CRS and occupying the pattern of at least one other CRS antenna port with DMRS.

More specifically, in one embodiment, the pattern for more than one CRS antenna port may be occupied with DMRS for one layer in one cell.

In another embodiment, the base station controls or coordinates a plurality of cells and the first and second reference signals apply to more than one cell.

Any method as defined above may further comprise configuring a terminal to expect the at least one second reference signal in the one or more locations occupied by the second reference signal.

According to a second aspect of the present invention, there is provided a wireless communication system comprising a base station, and a plurality of terminals in wireless communication with the base station via one or more cells, a transmission from the base station comprising at least one resource block, the wireless communication system defining a plurality of potential locations within the resource block permitting placement of a plurality of first reference signals, the first reference signals being common to the plurality of terminals; wherein the base station is arranged to:
determine a need for a number of said first reference signals fewer than said plurality of first reference signals;
occupy one or more of said plurality of potential locations with said number of first reference signals determined to be needed, and occupy one or more of said plurality of potential locations remaining unoccupied after placing said number of first reference signals, with at least one second reference signal specific to a given terminal.

Again, the "number of said first reference signals" may be zero or more, so at a minimum no first reference signals occupy the potential locations in the resource block.

In this system, the base station may be further arranged to configure at least one of the terminals with expected locations of said at least one second reference signal, by indicating to the terminal one or more of the potential locations remaining unoccupied after placing any first reference signal(s).

According to a third aspect of the present invention, there is provided a base station for use in a wireless communication system comprising the base station and a plurality of terminals in wireless communication with the base station via one or more cells, a transmission from the base station comprising at least one resource block, the wireless communication system defining a plurality of potential locations within the resource block permitting placement of a plurality of first reference signals, the first reference signals being common to the plurality of terminals; wherein the base station is arranged to:
determine a need for a number of said first reference signals fewer than said plurality of first reference signals;
occupy one or more of said plurality of potential locations with said number of first reference signals determined to be needed, and occupy one or more of said plurality of potential locations remaining unoccupied after placing said number (zero or more) of first reference signals, with at least one second reference signal specific to a given terminal.

The base station may be further arranged to configure a terminal with expected locations of the at least one second reference signal, by indicating to the terminal one or more of said plurality of potential locations remaining unoccupied after placing the first reference signals (if any).

According to a fourth aspect of the present invention, there is provided a terminal for wireless communication with a base station in a wireless communication system, a transmission from the base station comprising at least one resource block, the wireless communication system defining a plurality of potential locations within the resource block permitting placement of a plurality of first reference signals, the first reference signals being common to a plurality of terminals; wherein the terminal is arranged to be configured with expected locations of at least one second reference signal, specific to the terminal, in one or more of said plurality of potential locations remaining unoccupied after placing zero or more said first reference signals.

The terminal may be further arranged to be configured with a modulation scheme associated with said at least one second reference signal.

A further aspect relates to software for allowing transceiver equipment equipped with a processor to provide any user equipment as defined above. Such software may be recorded on a computer-readable medium.

Throughout this section and the claims, the term "cell" is intended also to include sub-cells.

Thus, an embodiment of the present invention may provide a new Demodulation Reference Symbol (DMRS) pattern to be placed in some of the Resource Element (RE) locations originally reserved for Common Reference Symbol (CRS) ports. Depending on the number of CRS ports made available, the number of REs required for DMRS in each cell, and the number of cells for which those DMRSs need to be orthogonal to reduce interference, there will be various possibilities in the placement of DMRS in the CRS locations.

The new DMRS pattern proposed here will have the benefit of being orthogonal to the legacy DMRS patterns therefore not causing any interference. This new pattern will reuse some or possibly all of the CRS locations which could be reserved for CRS, in a particular reference signal pattern but are not needed to be so configured in the particular deployment scenario, for example in the Small cell environment, and these locations therefore provide abundant RE choices for the new DMRS pattern. The new DMRS pattern will occupy fewer REs in a LTE Resource Block (RB), than the DMRS defined in Rel 11 and also allow different REs to be used in neighboring cells, using the same cell dependent frequency shifts as for CRS. Such a reduced DMRS pattern could replace the DMRS patterns conventionally required in LTE, at least for some transmissions, thereby reducing the reference signalling overhead on the downlink.

In general, and unless there is a clear intention to the contrary, features described with respect to one aspect of the invention may be applied equally and in any combination to any other aspect, even if such a combination is not explicitly mentioned or described herein.

As is evident from the foregoing, the present invention involves signal transmissions between base stations and user equipments in a wireless communication system. A base station may take any form suitable for transmitting and receiving such signals. It is envisaged that the base stations will typically take the form proposed for implementation in the 3GPP LTE and 3GPP LTE-A groups of standards, and may therefore be described as an eNodeB (eNB) (which term also embraces Home eNodeB or Home eNodeB) as appropriate in different situations. However, subject to the functional requirements of the invention, some or all base stations may take any other form suitable for transmitting and receiving signals from user equipments, and for adapting signals for transmission to user equipments based on fed back channel state information.

Similarly, in the present invention, each user equipment may take any form suitable for transmitting and receiving signals from base stations. For example, the user equipment may take the form of a subscriber station (SS), or a mobile station (MS), or any other suitable fixed-position or movable form. For the purpose of visualising the invention, it may be convenient to imagine the user equipment as a mobile handset (and in many instances at least some of the user equipments will comprise mobile handsets), however no limitation whatsoever is to be implied from this.

### Brief Description of the Drawings

Reference is made, by way of example only, to the accompanying drawings in which:
Figure 1 illustrates a basic system architecture in LTE;
Figure 2 illustrates a Small Cell Network, SCN;
Figure 3 illustrates a generic frame structure used in LTE;
Figure 4 illustrates resource blocks (RBs) and resource elements (REs) in LTE;
Figure 5 shows the mapping between logical channels, transport channels and physical channels in LTE;
Figure 6 shows a Resource Block pair with a conventional Demodulation Reference Signals, DMRS, pattern in LTE for rank 1-4;
Figure 7 shows a conventional Common Reference Signal, CRS, pattern in LTE for four antenna ports;
Figure 8 is a flowchart of steps in a method embodying the present invention;
Figure 9 shows a first example of a novel DMRS pattern embodying the present invention, for a 2 CRS antenna ports case;
Figure 10 shows a second example of a novel DMRS pattern embodying the present invention, configured on 3 CRS antenna ports in the reference signal pattern for the 4 CRS ports case;
Figure 11 shows a third example of a novel DMRS pattern embodying the present invention, configured on 2 CRS antenna ports in the reference signal pattern for the 4 CRS ports case;
Figure 12 is a schematic block diagram of a UE to which the present invention may be applied; and
Figure 13 is a schematic block diagram of an eNodeB to which the present invention may be applied.

### Detailed Description

Due to the radio characteristics of indoor small cells, i.e. line of sight, slow fading, and relatively good sign strength, etc., there have been various discussions on how to reduce the number of REs used in a LTE Rel 10 DMRS pattern, which was given in Figure 6 for the rank 1-4 case. The aim is to use a reduced DMRS pattern as an optional alternative to existing DMRS, but with lower overhead.

One challenge to be met in any reduced DMRS pattern design is that the new DMRS pattern will need to be orthogonal to the legacy DMRS pattern to ensure backward capability and not to compromise the channel estimation accuracy. Some possible solutions (with drawbacks) are:-.
1. To nest the reduced DMRS pattern within the existing DMRS pattern, which means TDM and FDM are not possible, but the system may only rely on the CDM, which is not ideal as a solution.
2. To place the new DMRS in some PDSCH REs that are not taken by any RSs or PDCCH, however such resources are very scarce in the LTE RB grids.

To minimise the interference from the new DMRS pattern to the Rel 10 legacy DMRS pattern, a number of multiplexing methods can be considered and those include TDM, FDM or CDM as already mentioned. Therefore the choice of the new DMRS pattern RE locations on a Resource block (RB) grid, like the grid shown in Figure 6, is crucial to fulfil this objective.

Embodiments of the present invention "re-use" part of the existing defined CRS patterns, taking advantage of the radio characteristics exhibited in Small cells to reduce the number of CRS symbols actually transmitted to a subset of those defined in the pattern and occupying the locations of the unused CRS symbols by reference symbols in the new DMRS pattern.

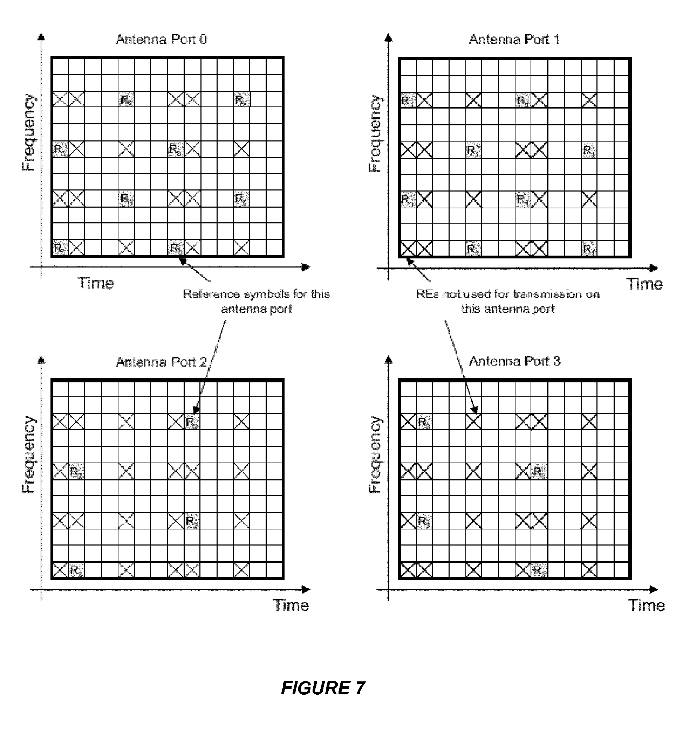

The four antenna ports CRS patterns are taken as an example and depicted in Figure 7. In Figure 7 (and in the subsequent Figures), small squares labelled R represent REs assigned to a reference signal (in other words reserved for transmission of a reference symbol). The numerical index 0, 1, ...etc represents the antenna port to which the reference signal applies. Small squares marked with an X indicate REs which are not available for placement of reference signals since the same RE is already in use in another antenna port.

There is not necessarily a direct link between the number of CRS ports configured for a cell, and the number of DMRS ports (equal to the number of layers) needed for transmission to a given UE in a given subframe. However, for cells which mainly use the more recent DMRS-based transmission modes, there may be no advantage in configuring more than two CRS ports. There is thus a distinction between the REs which could be configured for CRS, and those which actually are configured for CRS in a given cell. On the other hand, at present, all UEs expect at least one CRS port to be present, so subframes without any CRS would not be backwards-compatible.

The inventors have realised that in the Small cell environment, from the REs that may be reserved for the configuration of 4 CRS ports, a significant amount of these REs can be saved from being used by CRS, and instead may be used for transmission of the DMRS. This is because the configuration of CRS does not always need to cover four antenna ports; for example with small cells, it is likely that the channel conditions between the antenna ports may exhibit strong correlation and layer 1 transmission may always (or frequently) be used with high order modulation, possibly higher-order than modulation schemes currently defined in LTE, such as 256 QAM. Thus, CRS for one antenna port will suffice in this instance.

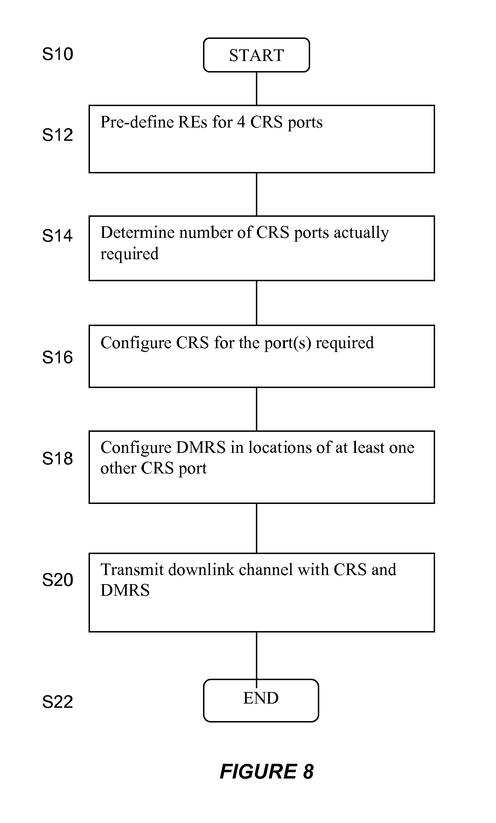

Figure 8 shows steps in a method embodying the present invention. The method starts at S10. In S12, locations for transmission of CRS are pre-defined for 4 antenna ports; this corresponds to the existing LTE/LTE-A specifications. During operation of the wireless communication system, an eNodeB serving one or more UEs in a cell checks how many CRS ports are actually required in the cell. This may be fewer than 4 as just explained. Next (step S16), the CRS actually required are configured in the form of the RS pattern applicable to the number of antenna port(s) needed for CRS. This leaves REs corresponding to at least two or three CRS antenna ports unused by CRS within the 4 port CRS pattern; in other words, there is at least one RS pattern available for transmission of DMRS which is not actually being used for CRS. In step S18, DMRS are arranged in the REs of the unused CRS antenna port(s). In step S20, the eNodeB transmits a downlink channel including both the CRS of the required antenna port(s), and the DMRS in REs corresponding to the other antenna port(s). The process then ends at S22.

The arrangement of reusing the CRS resources for the new DMRS pattern will offer ample possibilities for the configuration of the new DMRS pattern. Depending on the number of cells which will be considered for DMRS multiplexing, and the number of DMRS REs desired in a RB, there are a number of possibilities for the configuration of the new DMRS, and a few examples will now be given.

Starting from the 2 CRS ports configuration case, the antenna port 0 will remain to be used by CRS, which is highly preferable to maintain backward capability. Then the remaining antenna port 1 can be used by the DMRS as drawn in Figure 8. In Figure 8, the shaded squares indicate REs used for CRS in antenna port 0, plus REs used for the new DMRS, occupying locations which normally would be reserved for CRS on antenna port 1.

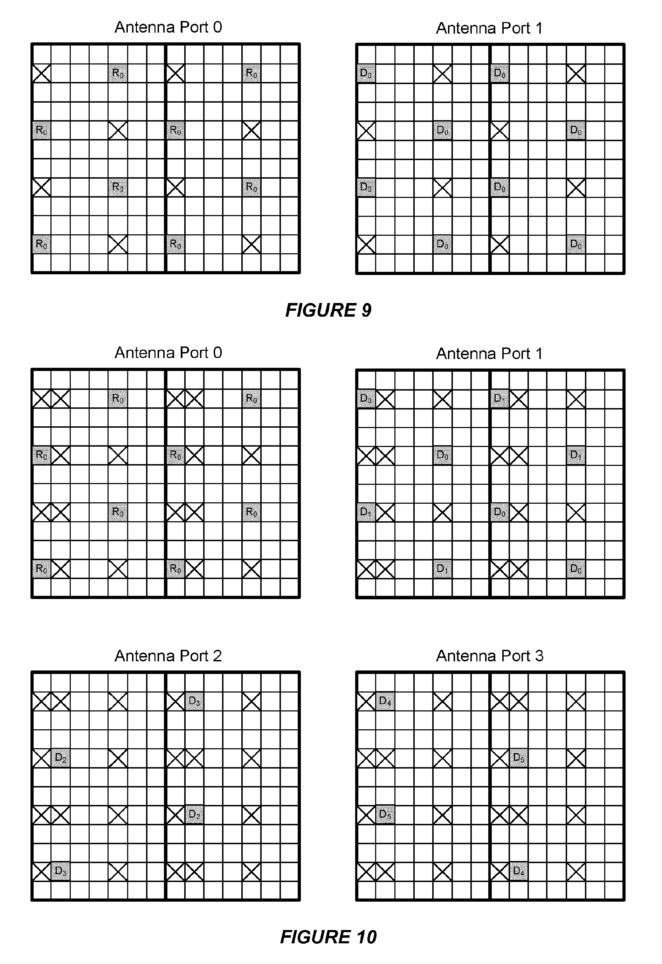

Figure 9 shows RS locations in one RB pair. For a given cell, the potential CRS locations are the same in other RBs and in other subframes. The new DMRS may or may not be present in other subframes/RBs, depending on whether or not those RBs use a transmission scheme compatible with the invention. Thus, the new DMRS of the invention may be arranged differently in different RBs, depending on the transmission scheme selected for each UE receiving data in a given subset of the RBs.

Considering a case where the DMRS may occupy locations potentially available for 4 CRS ports, as in the 2 CRS ports case, the configuration of Antenna Port 0 CRS is again preferably retained for backward compatibility. Assuming that only 1 CRS port is actually required, the other 3 CRS ports REs can be configured as DMRS. Suppose the UE is communicating via three cells in total. If 4 REs are required for rank 1 DMRS in two neighbouring cells and 2 REs are required for a third cell, the re-used REs from CRS port 1-3 will be to able host 6 orthogonal new DMRS patterns, as depicted in Figure 9. There could be other cells for which no new DMRS is provided, in which case these would continue to transmit a conventional DMRS pattern.

Incidentally, it is assumed here that either the same eNodeB controls all the cells, or that there is a level of coordination between eNodeBs sufficient to arrange orthogonal locations in the adjacent cells. It will be noted that an additional degree of freedom is available in that CRS locations in different cells are frequency shifted according to the cell ID. The same frequency shift would be applied to all the potential locations.

This is only an example of the possible configuration of the DMRS use of the CRS ports. Depending on the scenario, there may be more or less REs required for a reduced DMRS pattern in a given cell; therefore, the total number of REs saved from the CRS ports 1 - 3 will be able to host the orthogonal new DMRS pattern for a different number of cells, depending on configuration. The number of REs required by a cell will depend on such factors as the transmission rank (more ports need more REs), and the channel quality, which affects the number of REs needed for a UE to obtain a good channel estimate. The UE will provide CSI feedback to inform the eNodeB of the channel quality.

In the any of the above configurations, to ensure a good spread of time and frequency, the DMRS REs for the same cell are likely to be located at different frequencies and/or different times, but they do not have to be exactly as in Figure 9.

In another example, we consider the locations for the 4 CRS port pattern in the case where 2 CRS ports are required to be configured. Assuming those are the ports 0 and 1, the RE patterns for CRS port 2 and 3 may be reconfigured as locations for transmitting DMRS. Figure 10 illustrates an example. In this example, the locations normally reserved for both CRS port 2 and port 3 are configured for a single DMRS port for one spatial layer in the same cell. This configuration will boost the total DMRS energy for that cell, allowing the UE's estimate of the DMRS to be more accurate.

Some embodiments of the present invention will now be described in more detail.

In general, unless otherwise indicated, the embodiments described below are based on LTE, where the network comprises multiple eNodeBs, each controlling one or more downlink cells, and at least some of the downlink cells having a corresponding uplink cell. Each DL cell may serve one or more terminals (UEs) which may receive and decode signals transmitted in that serving cell. In order to control the use of transmission resources in time, frequency and spatial domains for transmission to and from the UEs, the eNodeB sends control channel messages (PDCCH or EPDCCH) to the UEs. A PDCCH/EPDCCH message typically indicates whether the data transmission will be in the uplink (using PUSCH) or downlink (using PDSCH). The resource assignments granted by the eNB in the DL are determined using channel state information. This is provided by feedback from the UE based on channel measurements made using reference signals as already mentioned, transmitted by the eNB for each cell that it supports. These reference signals include CRS and CSI-RS. The feedback typically consists of data rate in the form of a channel quality indicator (CQI), a precoding matrix indicator (PMI) and rank indicator (RI). While in the downlink, at least two kinds of RS are provided, which as already mentioned include Common Reference Signals (CRS), which are cell specific and available to all UEs in a cell, and Demodulation Reference Signals (DM-RS), which are embedded in the data to specific UEs and for the purpose of demodulation.

In a first embodiment, in a PRB for a given cell, of the REs potentially available for CRS in that cell, but not actually used for CRS, some of the REs are configured to be used by DMRS. Preferably, data transmitted may be transmitted in any REs not used for CRS or DMRS.

The second embodiment is like the first embodiment, except in addition, the DMRS are configured in the following patterns for avoiding interference among the DMRS across a number of neighbouring cells.
- In case of 2 CRS ports, the antenna port 0 is maintained as a CRS port, while the antenna port 1 will be used by DMRS. The made available REs in antenna port 0 can be then configured for DMRS and can be shared by DMRS from more than 1 cell.
- In case of 4 CRS ports, two antenna ports consisting of antenna port 0 and one port of ports 1-3 are maintained as CRS ports, the other two ports among ports 1-3 being used by DMRS. The REs thus made available can be configured as DMRS and these REs can be shared by DMRS from more than 1 cell.
- In case of 4 CRS ports, one antenna ports consisting of antenna port 0 is maintained as a CRS port. The REs reserved for the remaining ports from among ports 1-3 can instead be used for DMRS. The made available REs can be configured as DMRS and these REs can be shared by DMRS from more than 1 cell.

A third embodiment is like the second, except that, in all cases enumerated above for the second embodiment, usage of the made-available REs is limited so that they are not shared by DMRS from a plurality of cells but instead are exclusively used by DMRS for one layer in one cell, for the purpose of boosting the said DMRS's signal strength.

Although the above embodiments could conceivably be applied by predefining use of the novel DMRS of the invention, preferably the novel DMRS is employed on an optional basis, by suitably configuring UEs. This allows flexible application of the invention as appropriate, re-configuring the UEs to expect the novel DMRS as needed.

Thus, a fourth embodiment is like any of the first to third embodiments, except that in addition, the configuration of DMRS on CRS locations are signalled to a UE, with possible signalling options including and not limited to:
(i) A new Downlink Control Information (DCI) format to indicate various DMRS configurations in CRS locations;
(ii) A DCI format to indicates the use of 256 QAM and this will implicitly indicate the use of the new DMRS.

Such signalling need not explicitly indicate the new DMRS pattern in terms of the individual REs used. Since the UE already knows the patterns for CRS antenna ports configuration in the cell (that is, 1, 2 or 4 ports), it may suffice to inform the UE of the CRS antenna port(s) being reused for DMRS. For example if the cell is configured with 2 CRS ports (namely ports 0 and 1), if the UE receives an indication of a single DMRS port, it could assume that this port uses RE locations corresponding to both CRS ports 2 and 3. Similarly, if the UE receives an indication of two DMRS ports, it could assume that the RE locations for each port correspond to those of CRS ports 2 and 3 respectively.

It will be noted that if a UE assumes an incorrect location for the DMRS (or the wrong DMRS configuration), the demodulation reference is likely to be incorrect, and the UE will fail to decode the data being transmitted.

A fifth embodiment is aimed at future UEs which, unlike UEs up to Rel 11, do not require at least one CRS port to be present. In this case any or all of the CRS locations (CRS antenna port RS patterns for up to four ports) could be occupied by the novel DMRS pattern of the invention. Of course, use of this embodiment should be reserved for cells/eNodeBs serving no "legacy" UEs.

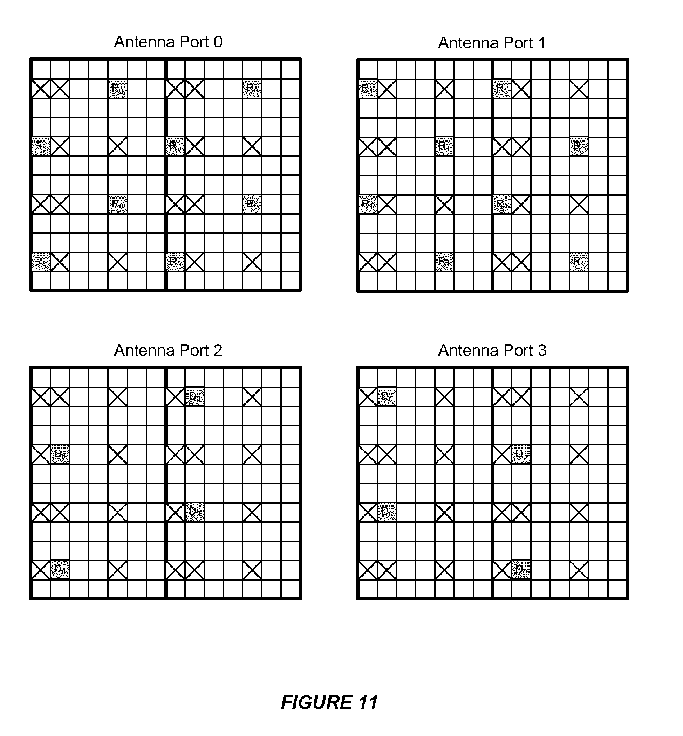

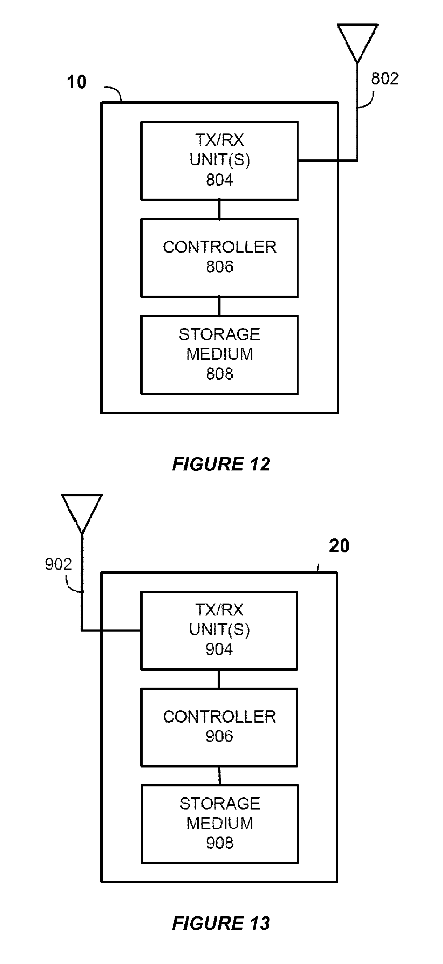

Figure 12 is a block diagram illustrating an example of a UE 10 to which the present invention may be applied. The UE 10 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The UE 10 includes transmitter/receiver unit(s) 804 connected to at least one antenna 802 (together defining a communication unit) and a controller 806 having access to memory in the form of a storage medium 808. The controller 806 may be, for example, Microprocessor, digital signal processor (DSP), application-specific integrated circuit (ASIC), field-programmable gate array (FPGA), or other logic circuitry programmed or otherwise configured to perform the various functions described above, such as receiving a configuration of the novel DMRS pattern of the invention. For example, the various functions described above may be embodied in the form of a computer program stored in the storage medium 808 and executed by the controller 806. The transmission/reception unit 804 is arranged, under control of the controller 806, to receive signals from the cells such as a PDCCH including various RS as shown in Figures 8-11 and so forth as discussed previously.

Figure 13 is a block diagram illustrating an example of an eNodeB 20 to which the present invention may be applied. The eNodeB 20 includes transmitter/receiver unit(s) 904 connected to at least one antenna 902 (together defining a communication unit) and a controller 906. The controller may be, for example, Microprocessor, DSP, ASIC, FPGA, or other logic circuitry programmed or otherwise configured to perform the various functions described above, such as determining, for a given UE, which antenna ports to configure and with which RS, which modulation scheme to employ, etc. For example, the various functions described above may be embodied in the form of a computer program stored in the storage medium 908 and executed by the controller 906. The transmission/reception unit 904 is responsible for transmission of reference signals, reception of signals from the UE 1 including channel feedback, and so on under control of the controller 906.

To summarise, embodiments of the present invention may provide a new Demodulation Reference Symbol (DMRS) pattern, which will be placed in some or all of the Resource Elements (RE) locations originally reserved for Common Reference Signal (CRS) ports. Depending on the number of CRS ports made available, the number of REs required for DMRS in each cell, and the number of cells for which those DMRS need to be orthogonal to reduce interference, there will be various possibilities in the placement of DMRS in the CRS locations.

Use of such a reduced DMRS pattern would not be restricted to any particular kind of cell, but may be especially beneficial with small cells and higher-order modulation. Alternatively, use of such a reduced DMRS pattern may boost the DMRS energy to improve detection of DMRS by UEs. The conventional DMRS may be retained for example in overlapping cells and/or for legacy UEs which do not recognise the new DMRS.

Various modifications are possible within the scope of the present invention.

As already mentioned, the term "cells" in the above description is to be interpreted broadly. Cells need not each have a different geographical area, or a different base station. In general, cells can be defined on a downlink, uplink, or on both.

The present invention can be used for UEs capable of being configured with the novel DMRS of the invention. Other UEs, which cannot receive the new DMRS, may still be present, in which case these UEs would use a legacy transmission mode based on CRS or conventional DMRS. It can be assumed that such UEs also would not support new features such as higher order modulation.

The invention is equally applicable to LTE FDD and TDD, and the principle applied to other communications systems such as UMTS.

This invention is likely to impact the LTE standards in the following aspects,
1. The introduction of a new DMRS pattern which are to be placed in locations potentially used by CRS in Small cells
2. The introduction of the signalling needed to inform a UE on such configuration, such as a new DCI format.

The features in the different embodiments above may be combined in the same embodiment. Moreover, various modifications are possible within the scope of the present invention.

Whilst the above description has been made with respect to LTE and LTE-A, the present invention may have application to other kinds of wireless communication system also. Accordingly, references in the claims to "user equipment" are intended to cover any kind of subscriber station, mobile terminal and the like and are not restricted to the UE of LTE.

Reference has been made above to CRS, where CRS refers to a cell-specific Common Reference Signal for estimating the channel in an LTE system. The present invention is not limited to the CRS of LTE, but can be applied to various reference signals.

It was assumed above that there are 4 CRS antenna ports defined, as this is the number currently adopted in LTE. However, the method of the invention could be adapted to a different number of CRS antenna ports if required.

Although it has been assumed above that the pattern of reference signals will be the same in different RBs and subframes, this is not essential. The reference signal pattern may differ between different subframes and between different RBs in the same subframe. In LTE, some reference signals have patterns which are the same across RBs and subframes, and others (such as DMRS and CSI-RS) vary between subframes, at least in the sense that the reference signal may be present in some subframes and not in others. The pattern of a given reference signal may also vary between cells.

It is not necessary to replace the whole of a defined CRS pattern by the novel DMRS. It may be sufficient for novel DMRS in accordance with the invention to occupy only a subset of the REs which could be reserved for the CRS of at least one antenna port. Thus, the pattern of the novel DMRS is not necessarily identical to a CRS pattern.

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be clearly understood that various changes and/or modifications may be made to the particular embodiment just described without departing from the scope of the claims.

### Industrial Applicability

The present invention is of application to the provision of reference signals in a wireless communication system. The new DMRS pattern proposed above will have the benefit of being orthogonal to the legacy DMRS patterns therefore not causing any interference. This new pattern will reuse the CRS locations which may be reserved for CRS but which do not need to be fully configured as CRS in the Small cell environment and therefore provide abundant RE choices for the new DMRS configuration. The new DMRS patterns will occupy fewer REs in a LTE Resource Block (RB), and also allow different REs to be used in neighbouring cells, using the same cell dependent frequency shifts as for CRS. Such a reduced DMRS pattern could replace the DMRS patterns conventionally required in LTE, thereby reducing signalling overhead on the downlink.

## Claims

1. A wireless communication method in which a base station transmits a downlink transmission to at least one of a plurality of terminals, said downlink transmission comprising at least one resource block capable of including at least one first reference signal and at least one second reference signal, the at least one first reference signal being common to the plurality of terminals, the at least one second reference signal being specific to a given terminal, the method comprising:
pre-defining a plurality of potential locations within the resource blocks for placement of a plurality of the first reference signals;
determining a need for a number of said first reference signals fewer than said plurality of first reference signals;
occupying some of said plurality of potential locations with said number of first reference signals determined to be needed, and occupying one or more of said plurality of potential locations remaining unoccupied after placing said number of first reference signals, with said at least one second reference signal.

2. The wireless communication method according to claim 1 wherein a pattern of potential locations is pre-defined for each of the plurality of first reference signals, and at least one pattern not occupied by any said first reference signal is occupied by said at least one second reference signal.

3. The wireless communication method according to claim 2 wherein the base station comprises a plurality of antenna ports and a said pattern of potential locations is pre-defined for each of the antenna ports, and said determining determines that first reference signals are not needed for one or more of the antenna ports.

4. The wireless communication method according to claim 3 comprising:
determining a need for first reference signals for at least one antenna port;
occupying the pattern for said at least one antenna port with the said at least one first reference signal; and
occupying, with the said at least one second reference signal, at least some locations of the pattern for at least one other antenna port.

5. The wireless communication method according to any preceding claim wherein the first reference signals are common reference signals, CRS, of a cell controlled by the base station, and the at least one second reference signal is a demodulation reference signal, DMRS, of the downlink transmission to the given terminal.

6. The wireless communication method according to claims 4 and 5 in combination, comprising occupying the pattern for one CRS antenna port with CRS and occupying the pattern of at least one other CRS antenna port with DMRS.

7. The wireless communication method according to claim 6 comprising occupying the pattern for more than one CRS antenna port with DMRS for one layer in one cell.

8. The wireless communication method according to claim 5 wherein the base station controls or coordinates a plurality of cells and the first and second reference signals apply to more than one cell.

9. A wireless communication method according to any preceding claim, further comprising configuring a said terminal to expect the at least one second reference signal in the one or more locations occupied by the at least one second reference signal.

10. A wireless communication system comprising a base station, and a plurality of terminals in wireless communication with the base station via one or more cells, a transmission from the base station comprising at least one resource block, the wireless communication system defining a plurality of potential locations within the resource block permitting placement of a plurality of first reference signals, the first reference signals being common to the plurality of terminals; wherein the base station is arranged to:
determine a need for a number of said first reference signals fewer than said plurality of first reference signals;
occupy one or more of said plurality of potential locations with said number of first reference signals determined to be needed, and occupy one or more of said plurality of potential locations remaining unoccupied after placing said number of first reference signals, with at least one second reference signal specific to a given terminal.

11. The wireless communication system according to claim 10 wherein the base station is further arranged to configure at least one of the terminals with expected locations of said at least one second reference signal, by indicating to the terminal one or more of the potential locations remaining unoccupied after placing said number of first reference signals.

12. A base station for use in a wireless communication system comprising the base station and a plurality of terminals in wireless communication with the base station via one or more cells, a transmission from the base station comprising at least one resource block, the wireless communication system defining a plurality of potential locations within the resource blocks permitting placement of a plurality of first reference signals, the first reference signals being common to the plurality of terminals; wherein the base station is arranged to:
determine a need for a number of said first reference signals fewer than said plurality of first reference signals;
occupy one or more of said plurality of potential locations with said number of first reference signals determined to be needed, and occupy one or more of said plurality of potential locations remaining unoccupied after placing said number of first reference signals, with at least one second reference signal specific to a given terminal.

13. The base station according to claim 12 further arranged to configure at least one of the terminals with expected locations of the at least one second reference signal, by indicating to the terminal one or more of said plurality of potential locations remaining unoccupied after placing said number of first reference signals.

14. A terminal for wireless communication with a base station in a wireless communication system, a transmission from the base station comprising at least one resource block, the wireless communication system defining a plurality of potential locations within the resource blocks permitting placement of a plurality of first reference signals, the first reference signals being common to a plurality of terminals; wherein the terminal is arranged to be configured with expected locations of at least one second reference signal, specific to the terminal, in one or more of said plurality of potential locations remaining unoccupied after placing zero or more said first reference signals.

15. The terminal according to claim 14 further arranged to be configured with a modulation scheme associated with said at least one second reference signal.

## Amended claims

### Amended claims in accordance with Rule 137(2) EPC.

1. A Long Term Evolution, LTE wireless communication method in which a base station (20) transmits a downlink transmission to at least one of a plurality of terminals (10), said downlink transmission comprising at least one resource block capable of including at least one first reference signal and at least one second reference signal, the at least one first reference signal being common to the plurality of terminals (10), the at least one second reference signal being specific to a given terminal (10), the method comprising:
pre-defining a plurality of potential locations within the resource blocks for placement of a plurality of the first reference signals; **characterised by**, in the base station (20):
determining a need for a number of said first reference signals fewer than said plurality of first reference signals;
occupying some of said plurality of potential locations with said number of first reference signals determined to be needed, and occupying one or more of said plurality of potential locations remaining unoccupied after placing said number of first reference signals, with said at least one second reference signal.

2. The LTE wireless communication method according to claim 1 wherein a pattern of potential locations is pre-defined for each of the plurality of first reference signals, and at least one pattern not occupied by any said first reference signal is occupied by said at least one second reference signal.

3. The LTE wireless communication method according to claim 2 wherein the base station (20) comprises a plurality of antenna ports and a said pattern of potential locations is pre-defined for each of the antenna ports, and said determining determines that first reference signals are not needed for one or more of the antenna ports.

4. The LTE wireless communication method according to claim 3 comprising:
determining a need for first reference signals for at least one antenna port;
occupying the pattern for said at least one antenna port with the said at least one first reference signal; and
occupying, with the said at least one second reference signal, at least some locations of the pattern for at least one other antenna port.

5. The LTE wireless communication method according to any preceding claim wherein the first reference signals are common reference signals, CRS, of a cell controlled by the base station (20), and the at least one second reference signal is a demodulation reference signal, DMRS, of the downlink transmission to the given terminal (10).

6. The LTE wireless communication method according to claims 4 and 5 in combination, comprising occupying the pattern for one CRS antenna port with CRS and occupying the pattern of at least one other CRS antenna port with DMRS.

7. The LTE wireless communication method according to claim 6 comprising occupying the pattern for more than one CRS antenna port with DMRS for one layer in one cell.

8. The LTE wireless communication method according to claim 5 wherein the base station (20) controls or coordinates a plurality of cells and the first and second reference signals apply to more than one cell.

9. The LTE wireless communication method according to any preceding claim, further comprising configuring a said terminal (10) to expect the at least one second reference signal in the one or more locations occupied by the at least one second reference signal.

10. A Long Term Evolution, LTE wireless communication system comprising a base station (20), and a plurality of terminals (10) in wireless communication with the base station (20) via one or more cells, a transmission from the base station (20) comprising at least one resource block, the wireless communication system pre-defining a plurality of potential locations within the resource block permitting placement of a plurality of first reference signals, the first reference signals being common to the plurality of terminals (10); **characterised in that** the base station (20) is arranged to:
determine a need for a number of said first reference signals fewer than said plurality of first reference signals;
occupy one or more of said plurality of potential locations with said number of first reference signals determined to be needed, and occupy one or more of said plurality of potential locations remaining unoccupied after placing said number of first reference signals, with at least one second reference signal specific to a given terminal (10).

11. The LTE wireless communication system according to claim 10 wherein the base station (20) is further arranged to configure at least one of the terminals (10) with expected locations of said at least one second reference signal, by indicating to the terminal (10) one or more of the potential locations remaining unoccupied after placing said number of first reference signals.

12. A base station (20) for use in a Long Term Evolution, LTE wireless communication system comprising the base station (20) and a plurality of terminals (10) in wireless communication with the base station (20) via one or more cells, a transmission from the base station (20) comprising at least one resource block, the wireless communication system pre-defining a plurality of potential locations within the resource blocks permitting placement of a plurality of first reference signals, the first reference signals being common to the plurality of terminals (10); **characterised in that** the base station (20) is arranged to:
determine a need for a number of said first reference signals fewer than said plurality of first reference signals;
occupy one or more of said plurality of potential locations with said number of first reference signals determined to be needed, and occupy one or more of said plurality of potential locations remaining unoccupied after placing said number of first reference signals, with at least one second reference signal specific to a given terminal (10).

13. The base station (20) according to claim 12 further arranged to configure at least one of the terminals (10) with expected locations of the at least one second reference signal, by indicating to the terminal (10) one or more of said plurality of potential locations remaining unoccupied after placing said number of first reference signals.
